# FASCICULE DE BREVET EUROPEEN

(11) **EP 3 393 834 B1**
(45) Date de publication et mention de la délivrance du brevet: **30.10.2019**
(21) Numéro de dépôt: 16813106.8
(22) Date de dépôt: 08.12.2016
(51) Int. Cl.: B60J 1/16, B60J 10/244

(54) **PANNEAU ÉTANCHE MOBILE POUR UNE PAROI D'UN VÉHICULE AUTOMOBILE**
BEWEGLICHE LECKDICHTE PLATTE FÜR EINE KRAFTFAHRZEUGWAND
MOVABLE LEAKTIGHT PANEL FOR A MOTOR VEHICLE WALL

(30) Priorité: 23.12.2015 FR 1563256
(43) Date de publication de la demande: 31.10.2018
(73) Titulaire: Renault S.A.S., 92100 Boulogne-Billancourt (FR)
(72) Inventeur: BEZEAULT, Loic, 78150 Le Chesnay (FR); HEWAK, Gregor, 95490 Vaureal (FR); TANGUY, Jean-Philippe, 91380 Chilly-Mazarin (FR)
(86) Numéro de dépôt international: PCT/FR2016/053262
(87) Numéro de publication internationale: WO 2017/109324

(56) Documents cités:
- EP-A2- 0 604 033
- US-A- 5 046 285
- US-A- 5 339 488

## Description

La présente invention concerne de manière générale le domaine des véhicules automobiles.

Elle concerne plus particulièrement un panneau étanche mobile pour une paroi d'un véhicule automobile.

Elle concerne également un véhicule automobile comportant une telle paroi.

### ARRIERE-PLAN TECHNOLOGIQUE

On connaît notamment des portes de véhicule automobile mobile en pivotement et équipée d'un joint d'étanchéité gonflable et dégonflable.

L'utilisation de ce joint gonflable et dégonflable présente l'avantage d'assurer une étanchéité efficace de la porte sur la structure du véhicule.

Cependant, la mise en œuvre de la porte est rendu complexe par le fait que les frottements qui seraient occasionnés par la fermeture ou l'ouverture de la porte avec le joint gonflé sont trop importants pour permettre une telle manipulation de la porte.

Un tel joint d'étanchéité doit alors être dégonflé afin de permettre le mouvement de pivotement de la porte pour son ouverture ou sa fermeture. Il est gonflé lorsque la porte est fermée de manière à assurer l'étanchéité de la fermeture de la porte.

Le gonflage et dégonflage du joint d'étanchéité est réalisé par une pompe électrique actionnée électroniquement par un actionneur adapté notamment à détecter le mouvement de la poignée de la porte signalant son ouverture imminente.

La réalisation de cette porte de véhicule automobile est donc relativement complexe et coûteuse. D'autres exemples de panneaux étanches mobiles sont connus notamment des documents US5046285 et EP0604033.

### OBJET DE L'INVENTION

Afin de remédier à l'inconvénient précité de l'état de la technique, la présente invention propose un panneau étanche mobile pour une paroi d'un véhicule automobile simplifié et peu coûteux.

Plus particulièrement, on propose selon l'invention un panneau étanche mobile pour une paroi d'un véhicule automobile conforme à la revendication 1.

Ainsi, grâce à l'invention, il est possible de mettre en œuvre un panneau mobile d'une paroi d'un véhicule automobile munie d'un joint d'étanchéité gonflable et dégonflable de manière simple et économique.

En outre, selon une caractéristique particulièrement avantageuse du panneau selon l'invention, le dispositif de montage du panneau est adapté au montage à coulissement de ce panneau sur ladite paroi.

D'autres caractéristiques non limitatives et avantageuses du panneau conforme à l'invention, prises individuellement ou selon toutes les combinaisons techniquement possibles, sont énoncées dans les revendications 2 à 9. En outre, l'invention concerne également un véhicule automobile et conforme à la revendication 10.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective d'un panneau selon l'invention, dans laquelle les moyens de couplage entre le dispositif de montage et les moyens de gonflage et dégonflage sont dans une première configuration embrayée,
- la figure 2 est une vue similaire à celle de la figure 1 dans laquelle les moyens de couplage entre le dispositif de montage et les moyens de gonflage et dégonflage sont dans une deuxième configuration de dégonflage du joint d'étanchéité,
- la figure 3 est une vue similaire à celle de la figure 1 dans laquelle les moyens de couplage entre le dispositif de montage et les moyens de gonflage et dégonflage sont dans une troisième configuration débrayée,
- la figure 4 est une vue similaire à celle de la figure 1 dans laquelle les moyens de couplage entre le dispositif de montage et les moyens de gonflage et dégonflage sont dans une quatrième configuration de fin de course en coulissement,
- la figure 5 est une vue de dessus du panneau de la figure 1,
- la figure 6 est une vue de détail de la région A de la figure 5,
- la figure 7 est une vue en coupe selon le plan B de la figure 1,
- les figures 8 à 11 sont des vues schématiques de principe correspondant aux figures 1 à 4,
- la figure 12 est une vue de détails des moyens de couplage du panneau de la figure 1,
- la figure 13 est une vue en coupe du panneau de la figure 1 selon la ligne C-C de la figure 1,
- la figure 14 est une vue de face extérieure du panneau de la figure 1, monté sur la paroi d'un véhicule automobile en position de libération,
- la figure 15 est une vue de face extérieure du panneau de la figure 1, monté sur la paroi d'un véhicule automobile en position d'obturation.

### Dispositif

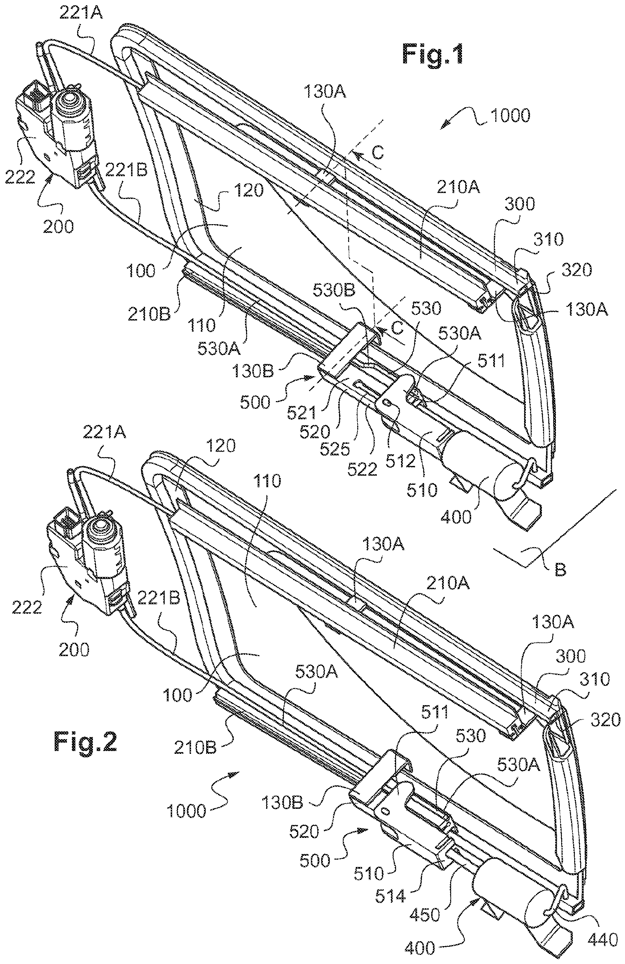

Sur les figures 1 à 11, 13 et 14, on a représenté un panneau 1000 conforme à l'invention.

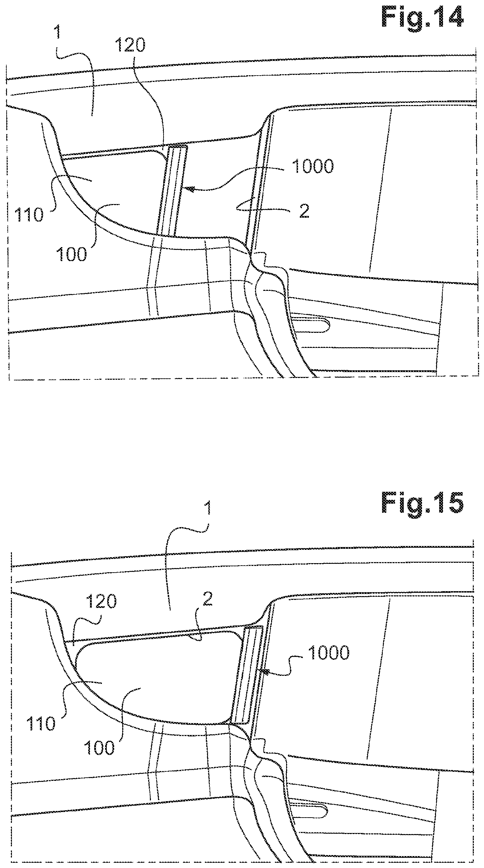

Ce panneau 1000 est adapté à être monté sur une paroi 1 (figures 14 et 15) d'un véhicule automobile (non représenté).

Plus précisément, le panneau 1000 comprend une plaque 100 adaptée à obturer une ouverture 2 ménagée dans ladite paroi 1 du véhicule automobile (figures 14 et 15). Cette plaque 100 présente une forme globalement rectangulaire.

En particulier, le panneau 1000 forme une porte ou une vitre du véhicule automobile.

Plus précisément, dans l'exemple représenté sur les figures adjacentes, le panneau 1000 forme une vitre adaptée à obturer une fenêtre du véhicule automobile. A cet effet, la plaque 100 comporte une partie centrale 110 réalisée dans un matériau transparent, par exemple en verre, et une partie périphérique 120 réalisée dans un matériau opaque ou transparent, (figures 14 et 15).

La partie périphérique 120 forme un cadre de support pour la partie centrale 110 en matériau transparent (figures 1 à 4).

La paroi 1 du véhicule concernée peut notamment être une porte du véhicule ou une aile latérale du véhicule. Il s'agit ici d'une aile latérale de ce véhicule (figures 14 et 15).

Le panneau 1000 comporte en outre un dispositif de montage mobile 200 de ladite plaque 100 sur ladite paroi 1.

Plus précisément, ici, ce dispositif de montage mobile 200 autorise le montage du panneau 1000 sur la paroi 1 du véhicule de manière à ce que ledit panneau 1000 soit mobile en coulissement par rapport à cette paroi 1.

Le coulissement du panneau 1000 s'effectue dans un plan sensiblement parallèle au plan de l'ouverture 2 de la paroi 1 adaptée à être obturée par le panneau 1000. Ce coulissement s'effectue par exemple selon une direction sensiblement horizontale ou verticale par rapport à l'orientation du véhicule posé sur le sol en position d'utilisation.

Sur l'exemple des figures 14 et 15, le panneau 1000 forme plus précisément une vitre de custode adaptée à coulisser selon une direction horizontale par rapport au véhicule.

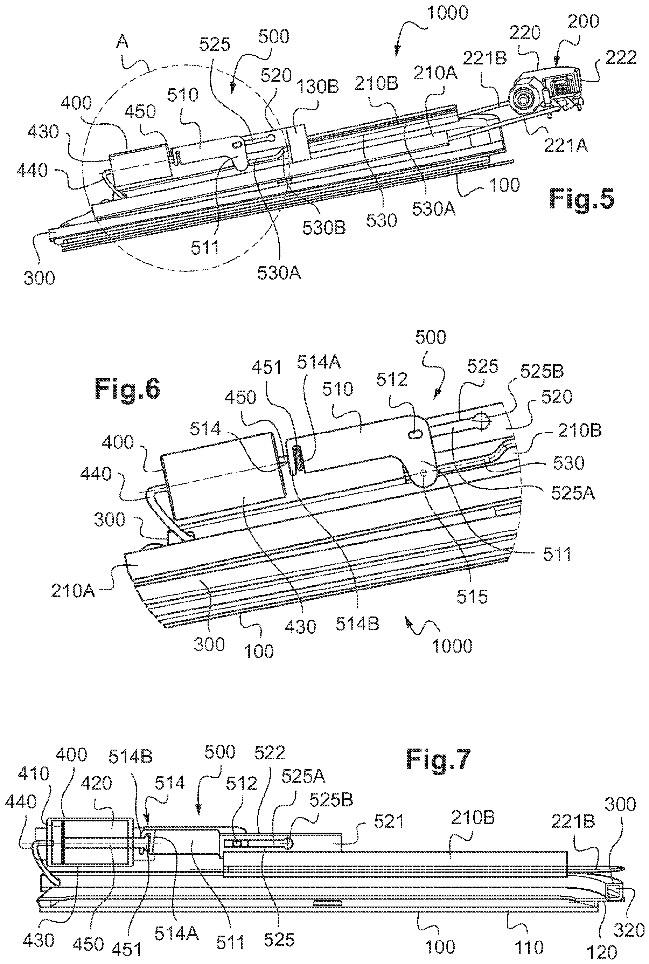

Ici, le dispositif de montage 200 à coulissement comporte au moins un rail 210A, 210B dans lequel ladite plaque 100 est montée à coulissement et des moyens d'entraînement 220 (visibles sur la figure 6) de la plaque 100 en coulissement sur le rail 210A, 210B.

Il est prévu ici plus précisément deux rails, un rail supérieur 210A et un rail inférieur 210B disposés de manière à s'étendre sensiblement parallèlement l'un à l'autre, sensiblement horizontalement comme représenté sur les figures.

Chaque rail de montage 210A, 210B est adapté à être fixé sur la paroi 1, le long d'un bord de l'ouverture 2.

La plaque 100 est montée sur ces rails 210A, 210B par l'intermédiaire de pattes de montage 130A, 130B.

Le dispositif de montage 200 comporte ici plus précisément deux pattes de montage 130A fixées, à une première de leurs extrémités, sur la plaque 100 et comprenant, à la deuxième extrémité, des moyens de coopération avec le rail supérieur 210A.

Le dispositif de montage 200 comporte en outre une patte 130B unique similaire, fixée, à une première de ses extrémités, sur la plaque 100 et comprenant, à sa deuxième extrémité, des moyens de coopération avec le rail inférieur 210B.

Chaque rail 210A, 210B présente ici une forme allongée globalement parallélépipédique, et s'étend le long d'un côté de la plaque 100. Les deux rails 210A, 210B s'étendent plus précisément ici le long de deux côtés opposés de la plaque 100.

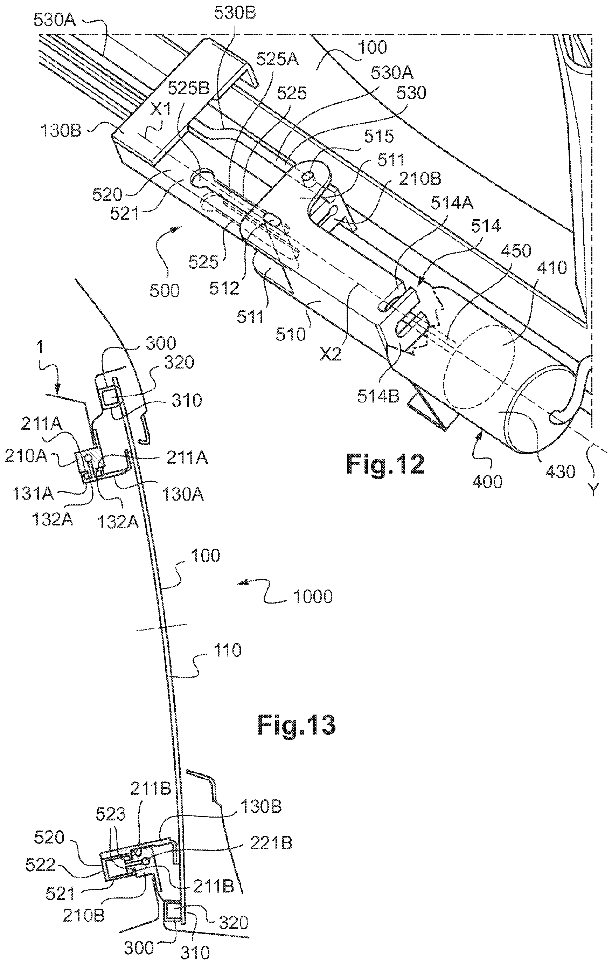

Deux faces longitudinales opposées de ce rail 210A, 210B comprennent chacune, ménagée en creux, une rainure 211A, 211B. Les deux rainures 211A, 211B de chaque rail 210A, 210B sont disposées en regard l'une de l'autre (figure 13).

La première extrémité de chaque patte de montage 130A, 130B est par exemple collée sur la face interne de la plaque 100 destinée à être tournée vers l'intérieur du véhicule.

Pour les pattes de montage 130A montées sur le rail supérieur 210A, la deuxième extrémité de chaque patte de montage 130A, présente ici la forme d'un profilé 131A en U, avec deux ailes latérales s'élevant à partir d'un fond et munies le long de leur bord libre de deux retours 132A en vis-à-vis qui s'engagent dans les deux rainures 211A correspondante ménagées dans deux faces opposées du rail 210A correspondant (figure 13).

Pour la patte de montage 130B montée sur le rail inférieur 210B, la deuxième extrémité de cette patte de montage 130B est fixée sur un patin qui sera décrit ultérieurement, par exemple par collage ou par vissage.

Ces pattes de montage 130A, 130B sont visibles notamment sur la vue en coupe de la figure 13. Cette coupe est faite selon un plan de coupe C-C brisé de la figure 1, de manière à passer par l'une des pattes de montage 130A en coopération avec le rail supérieur 210A et par la patte de montage 130B coopérant avec le rail inférieur 210B.

Ici, lesdits moyens d'entraînement 220 comportent un câble 221A, 221B adapté à être actionné par un moyen d'actionnement 222 électrique ou manuel. Il s'agit ici d'un moteur électrique 222.

Ce câble 221A, 221B circule partiellement dans une gouttière ménagée dans les rails supérieur 210A et inférieur 210B.

Le câble 221A, 221B comprend une partie de câble supérieure 221A reliée aux pattes de montage 130A et une partie de câble inférieure 211B.

En variante, le câble peut être actionné manuellement, par exemple grâce à une manivelle.

Le panneau 1000 comporte en outre un joint d'étanchéité 300 gonflable et dégonflable, adapté à être disposé entre la plaque 100 et la paroi, ainsi que des moyens de gonflage et de dégonflage 400 de ce joint d'étanchéité 300.

Ce joint d'étanchéité 300 comprend une enveloppe externe 310 souple délimitant un logement intérieur 320 adapté à se remplir d'un fluide (voir notamment la figure 13).

L'enveloppe externe est par exemple réalisée en caoutchouc.

Ce terme fluide désigne ici un gaz ou un liquide, de préférence un gaz, par exemple de l'air.

Ce joint d'étanchéité 300 est adapté à être fixé sur la paroi 1. Il s'étend selon un trajet présentant ici une forme en U, avec deux parties latérales qui s'étendent parallèlement aux rails 210A, 210B et une partie centrale reliant celles-ci (figures 1 à 4).

En variante non représentée, le joint d'étanchéité peut être fixé sur les rails supérieur et inférieur, eux-mêmes adaptés à être fixés sur la paroi.

Les moyens de gonflage et dégonflage 400 comportent ici un piston 410 adapté à se déplacer en translation dans une chambre 420 en communication fluidique avec le logement intérieur 320 (visible sur la figure 7) du joint d'étanchéité 300, de manière à pousser le fluide vers le joint d'étanchéité 300 dans un sens de déplacement du piston 410 et à extraire ce fluide hors du joint d'étanchéité 300 dans l'autre sens de déplacement du piston 410.

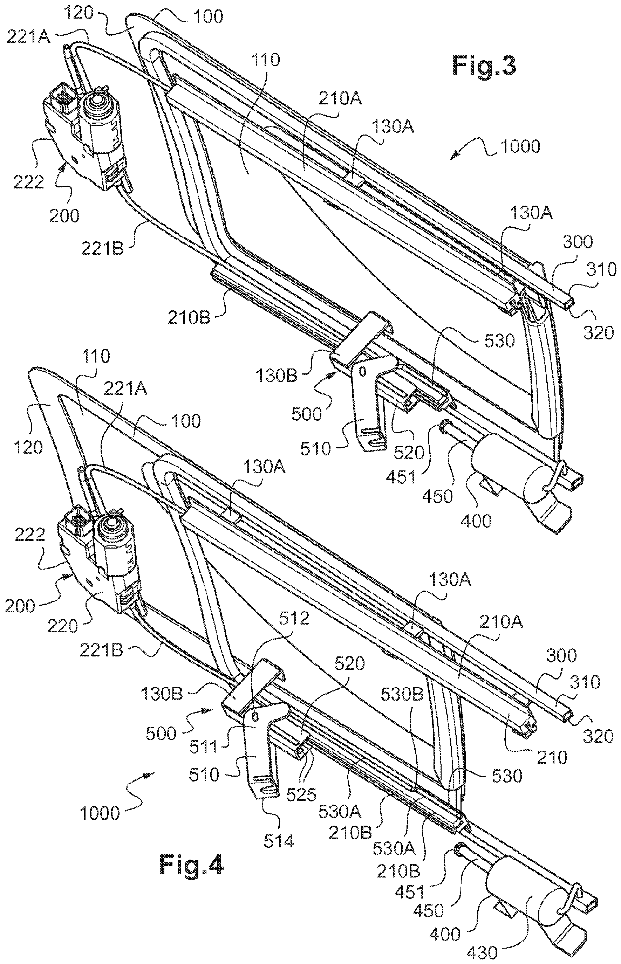

Plus précisément ici, les moyens de gonflage et dégonflage 400 comprennent ici un manchon 430 cylindrique délimitant intérieurement la chambre 420. Le piston 410 présente une forme circulaire de manière à coulisser dans le manchon 430. Le piston 410 est lié à une tige 450 qui coulisse à travers une paroi avant du manchon 430 (figures 3, 4 et 7) et fait saillie à l'extérieur de celui-ci. La chambre 420 est fermée à l'avant par ledit piston 410.

En variante, le manchon et le piston peuvent présenter toute forme possible connue de l'Homme du métier.

La chambre 420 est fermée à l'arrière par une paroi de fond dans laquelle est ménagée une ouverture débouchant dans un conduit 440 qui relie la chambre 420 au logement intérieur 320 du joint d'étanchéité 300.

Ainsi, lorsque le piston 410 se déplace vers le fond du manchon 430, l'air contenu dans la chambre 420 est comprimé puis poussé dans le conduit 440, qui l'achemine vers le logement intérieur 320 du joint d'étanchéité 300.

Le dispositif de gonflage et de dégonflage 400 est disposé à proximité de l'extrémité inférieure du joint d'étanchéité 300. Plus précisément, le manchon 430 est fixé à la paroi 1 de sorte que le piston 410 se déplace selon un axe de coulissement Y parallèle au rail inférieur 210B. La tige 450 s'étend donc selon cet axe de coulissement Y (figure 12).

De manière remarquable, le panneau 1000 comporte en outre un dispositif de couplage mécanique 500 entre le dispositif de montage 300 mobile de la plaque et les moyens de gonflage et dégonflage 400 du joint d'étanchéité 300.

Le dispositif de couplage mécanique 500 relie mécaniquement le dispositif de montage 200 mobile de la plaque et les moyens de gonflage et dégonflage 400 du joint d'étanchéité 300.

Le lien entre le dispositif de montage 200 mobile de la plaque et les moyens de gonflage et dégonflage 400 du joint d'étanchéité 300 est ici exclusivement mécanique.

Le dispositif de couplage 500 relie ledit dispositif de montage 200 auxdits moyens de gonflage et dégonflage 400 de telle sorte que la mise en œuvre du dispositif de montage pour faire passer la plaque 100 de sa position d'obturation vers sa position de libération entraîne le dégonflage du joint d'étanchéité 300 et la mise en œuvre du dispositif de montage 200 pour faire passer la plaque 100 de sa position de libération vers sa position d'obturation entraîne le gonflage du joint d'étanchéité 300.

Plus précisément, lesdits moyens de couplage 500 établissent une liaison mécanique entre le dispositif de montage 200 de la plaque 100 et le piston 410 des moyens de gonflage et de dégonflage 400.

Ces moyens de couplage 500 comprennent un actionneur 510 relié audit dispositif de montage 200 et monté sur un patin 520 solidaire de ladite plaque 100.

Ils comprennent également une gorge 530 ménagée ici dans le rail inférieur 210B.

En pratique, dans l'exemple de réalisation représenté sur les figures, le patin 520 se présente sous la forme d'un profilé en U avec deux ailes latérales 521 s'élevant à partir d'un fond 522 et munies le long de leur bord libre de deux retours 523 en vis-à-vis qui s'engagent dans les deux rainures 211B correspondante ménagées dans deux faces opposées du rail 210B correspondant (figure 13).

Le patin 520 est ainsi monté mobile à coulissement sur le rail inférieur 210A par l'engagement des retours 523 dans les rainures 211B du rail inférieur 210B.

Ici, la patte de montage 130B des moyens de montage 200 de la plaque 100 sur le rail inférieur 210B relie la plaque 100 au patin 520, de telle sorte que le patin 520 et la plaque 100 sont solidaires. En d'autres termes, le patin 520 et la plaque 100 sont liés de telle sorte qu'ils coulissent simultanément, le mouvement de l'un entraînant le mouvement de l'autre.

Ce patin 520 présente une forme allongée selon un axe longitudinal X1 parallèle au rail inférieur 210B.

En outre, le patin 520 est positionné de telle sorte que son axe longitudinal X1 s'étend parallèlement à l'axe de coulissement Y du piston 410 des moyens de gonflage et de dégonflage 400.

Chaque aile latérale 521 du patin 520 comprend une ouverture 525 en trou de serrure qui s'étend longitudinalement le long du patin 520. Ces deux ouvertures 525 en trous de serrure sont disposées en vis-à-vis (figures 6, 7, 12).

Elles comprennent chacune une partie droite 525A de forme allongée selon l'axe longitudinal X1 du patin 520 et une extrémité de forme arrondie 525B présentant un diamètre supérieur à la largeur de la partie droite 525A de l'ouverture 525.

L'actionneur 510 comporte corps creux présentant une forme allongée selon un axe longitudinal X2.

Il est muni à une première de ses extrémités de moyens de montage sur le patin 520 et à sa deuxième extrémité de moyens de coopération avec les moyens de gonflage et de dégonflage 400 du joint d'étanchéité 300.

La première extrémité du corps creux du patin 520 comporte ainsi deux parois 511 parallèles qui encadrent les ailes latérales 521 du patin 520. Ces deux parois 511 sont reliées par un montant 512, qui traverse les ouvertures 525 des ailes latérales 521 du patin 520.

Ce montant 512 présente une section transverse de forme allongée, par exemple de forme elliptique.

Ainsi, le montant 512 présente une première dimension transverse, mesurée dans un plan parallèle aux parois 511 selon l'axe longitudinal X2 de l'actionneur 510 et une deuxième dimension transverse, mesurée dans un plan parallèle aux parois 511 selon une direction perpendiculaire à l'axe longitudinal X2 de l'actionneur 510, telle que la première dimension transverse est supérieure à la deuxième (figure 12).

Les dimensions des ouvertures 525 du patin 520 sont telles que le montant 512 de l'actionneur 510 ne peut être reçu dans la partie droite 525A de cette ouverture 525 que lorsque l'axe longitudinal X2 de l'actionneur 510 s'étend parallèlement à l'axe longitudinal X1 du patin 520 (figure 12).

En d'autres termes, ici la largeur de la partie droite 525A de chaque ouverture 525 est égale à un jeu près, à la deuxième dimension du montant 512.

Le diamètre de la partie arrondie 525B de chaque ouverture 525 est lui égale, à un jeu près, à la première dimension du montant 512.

Le montant 512 est alors adapté à coulisser dans la partie droite 525A de chaque ouverture 525 en trou de serrure du patin 520 et adapté à pivoter dans la partie arrondie 525B de cette ouverture 525.

Lesdits moyens de coopération avec les moyens de gonflage et de dégonflage 400 du joint d'étanchéité 300 comprennent, à la deuxième extrémité de l'actionneur 510, un crochet 514 adapté à coopérer avec une extrémité évasée 451 de la tige 450 reliée au piston 410 desdits moyens de gonflage et de dégonflage 400 (figures 3, 4 et 7).

La deuxième extrémité de l'actionneur 510 comporte ainsi une paroi de butée 514A pleine, contre laquelle l'extrémité évasée 451 de la tige 450 peut venir en butée, et, à distance de cette paroi de butée 514A pleine, parallèle à celle-ci, une paroi d'accrochage 514B munie d'une découpe à travers laquelle la tige 450 peut s'engager, de manière à ce que l'extrémité évasée 451 de la tige 450 puisse être insérée entre la paroi de butée 514A et la paroi d'accrochage 514B (figures 5, 6, 7 et 12) du crochet 514 de l'actionneur 510.

L'accrochage de l'extrémité évasée 451 de la tige 450 se fait par pivotement de l'actionneur 510 autour du montant 512 lorsque celui-ci est dans la partie arrondie 525B de l'ouverture du patin 520, comme cela sera expliqué plus en détails ultérieurement. De même, par pivotement dans l'autre sens, l'actionneur 510 peut être dégagé de l'accrochage avec cette tige 450.

La coopération de l'actionneur 510 avec la tige 450 est ainsi débrayable.

L'actionneur 510 est relié au câble inférieur 210B et adapté à être mis en mouvement par ce câble 210B. Le câble tire l'actionneur en translation le long du rail inférieur 210B.

Le mouvement de pivotement de l'actionneur 510 est contrôlé par l'intermédiaire de la gorge 530 desdits moyens de couplage 500.

Cette gorge 530 est ici ménagée dans le rail inférieur 210B. Elle comporte trois parties : deux parties rectilignes 530A parallèles au rail inférieur 210B donc à la direction de coulissement de la plaque 100 dans le rail inférieur 210B, reliées entre elles par une partie inclinée 530B par rapport à cette direction de coulissement.

L'une des parois 511 de l'actionneur 510 située à proximité de cette gorge 530 comprend, en correspondance, un pion 515 engagé dans cette gorge 530. Ce pion 515 est adapté à coulisser dans la gorge 530 lorsque l'actionneur 510 coulisse dans chaque ouverture 525 du patin 520 (figure 12).

Ce pion 515 et la partie inclinée 530B de la gorge 530 sont positionnés de telle sorte que, lorsque le montant 512 de l'actionneur 510 coulisse dans la partie droite 525A de chaque ouverture 525 du patin 520, le pion 515 glisse dans une première partie rectiligne 530A de la gorge 530. Lorsque le montant 512 de l'actionneur 510 arrive dans la partie arrondie 525B de chaque ouverture 525, le pion 515 arrive au niveau de la partie inclinée 530B de la gorge 530. Le passage dans cette partie inclinée implique un pivotement de l'actionneur 510, autorisé par le positionnement du montant 512 dans la partie arrondie 525B de l'ouverture 525.

En variante, on peut envisager notamment que la gorge soit ménagée dans une baguette indépendante du rail inférieur, rapportée sur ce rail ou sur la paroi.

### Procédé

En pratique, le fonctionnement du panneau coulissant 1000 selon l'invention est explicité ci-dessous.

De manière générale, l'actionneur 510 est ici monté mobile sur ledit patin 520 de telle sorte que, lorsque le dispositif de montage 200 est actionné de manière à faire passer la plaque 100 de sa position d'obturation à sa position de libération, l'actionneur 510 est déplacé en translation de manière à :
- entraîner le déplacement du piston 410 des moyens de gonflage et dégonflage 400 dans le sens entraînant le dégonflage du joint d'étanchéité 300, puis
- débrayer la coopération de l'actionneur 510 et du piston 410, et
- entraîner en coulissement la plaque 100 elle-même ;
et lorsque le dispositif de montage 200 est actionné de manière à faire passer la plaque 100 de sa position de libération à sa position d'obturation, l'actionneur 510 est déplacé en translation de manière à :
- entraîner en coulissement la plaque 100 elle-même,
- embrayer la coopération de l'actionneur 510 et du piston 410, et
- entraîner le déplacement du piston 410 des moyens de gonflage et dégonflage 400 dans le sens entraînant le gonflage du joint d'étanchéité 300.

Plus précisément, lors de l'installation du panneau coulissant 1000, les rails supérieur 210A et inférieur 210B, le joint gonflable et dégonflable 300 ainsi que le dispositif de gonflage dégonflage 400 sont fixés sur la paroi 1.

La plaque 100 est montée à coulissement sur lesdits rails supérieur 210A et inférieur 210B par l'intermédiaire des languettes supérieure et inférieure.

Le moteur 222 est également fixé sur la paroi 1.

On considère le panneau 1000 dans une configuration initiale dans laquelle la plaque 100 se trouve dans sa position d'obturation de l'ouverture 2 de la paroi 1, comme cela est représenté par exemple sur les figures 1, 5, 6, 7 et 15.

Dans cette configuration initiale, le joint d'étanchéité 300 est gonflé, la plaque 100 ferme hermétiquement l'ouverture 2 de la paroi 1.

Lorsque l'utilisateur souhaite libérer l'ouverture 2 de la paroi 1, il actionne les moyens d'entraînement 200 de la plaque 100. Il s'agit ici d'envoyer au moteur électrique 222 un signal entraînant la rotation du moteur électrique de manière à enrouler le câble 221A, 221B.

Ce câble 221A, 221B tire alors la plaque 100 vers le moteur électrique 222.

Plus précisément, le câble 221B tire l'actionneur 510, auquel il est relié, vers le moteur électrique 222, dans la direction de coulissement de la plaque 100, dans le sens de la libération de l'ouverture 2.

Dans une première partie du mouvement de l'actionneur 510 entraîné par le câble 221B, l'actionneur 510 coulisse sur le patin 520, sans entraîner le mouvement de la plaque 100. Il est guidé à cet effet par la coopération de son montant 512 et des ouvertures 525 du patin 520 et par le coulissement du pion 515 dans la gorge 530 desdits moyens de couplage 500, au niveau de la première partie rectiligne 530A de cette gorge 530.

Ce montant 512 coulisse donc dans la partie droite 525A de chaque ouverture 525 du patin 520, parallèlement au rail inférieur 210B et à la plaque 100.

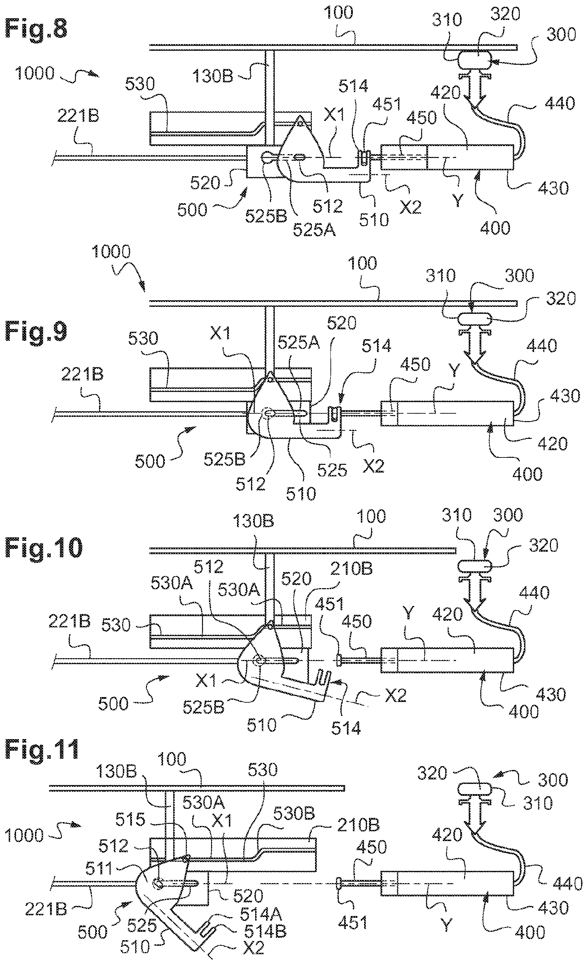

Ce faisant le crochet 514 de l'actionneur 510 étant initialement en coopération avec l'extrémité évasée 451 de la tige 450 solidaire du piston 410 des moyens de gonflage et dégonflage (figures 1, 5, 6, 7, 8), cette extrémité évasée 451 est tirée par l'actionneur 510 et la tige 450 coulisse dans le manchon 430, parallèlement au rail inférieur 210B et à la plaque 100 (figures 2 et 9).

Ainsi, le piston 410 coulisse dans le manchon 430, induisant une dépression dans la chambre 420 qui aspire le fluide contenu dans le joint d'étanchéité 300 vers la chambre dudit manchon 430.

Le joint d'étanchéité 300 se dégonfle au fur et à mesure du mouvement de coulissement de l'actionneur 510 (figure 9).

Lorsque le montant 512 de l'actionneur 510 arrive dans la partie arrondie 525B des ouvertures 525 du patin 520, le pion 515 arrive au niveau de la partie inclinée 530B de la gorge 530 (figure 9).

Le coulissement du pion 515 dans la partie inclinée 530B entraîne le pivotement du montant 512 de l'actionneur 510 dans la partie arrondie 525B des ouvertures 525 du patin 520 (figures 3 et 10).

L'actionneur 510 pivote autour du montant 512. Ce faisant, le crochet 514 pivote de manière à se désengager de la coopération avec l'extrémité évasée 451 de la tige 450 du piston 410 des moyens de gonflage et de dégonflage 400 (figures 3 et 10).

Lorsque l'actionneur 510 est ainsi libéré de sa coopération avec les moyens de gonflage et de dégonflage 400, le pion 515 continue à coulisser dans la deuxième partie rectiligne 530A de la gorge 530. Le pivotement de l'actionneur 510 est bloqué. Il reste dans la position pivotée dans laquelle son axe longitudinal X2 est incliné par rapport à l'axe longitudinal X1du patin 520 (figures 4 et 11).

Lorsque la traction du câble 211B continue à s'exercer sur l'actionneur 510, le montant 512 de celui-ci étant en butée contre la paroi latérale interne de la partie arrondie 525B de chaque ouverture 525 du patin 520, l'actionneur 510 entraîne le patin 520 en coulissement sur le rail inférieur 210B (figures 4 et 11).

Le patin 520 entraîne en coulissement la plaque 100 solidaire de celui-ci. Elle coulisse alors de sa position d'obturation de l'ouverture 2 de la paroi 1 (figures 3 et 10), vers une position de libération (figures 4 et 11) de cette ouverture 2.

Pour faire revenir la plaque 100 à sa position initiale, le moteur est actionné pour tourner dans l'autre sens et dérouler le câble 221A, 221B. L'actionneur 510 est poussé en coulissement dans le rail inférieur 210B et le pion 515 coulisse dans la deuxième partie 530A rectiligne de la gorge 530. L'actionneur 510 entraîne le patin 520 et donc la plaque 100. La plaque 100 passe alors de sa position de libération de l'ouverture 2 de la paroi 1 (figures 4 et 11) vers sa position d'obturation de cette ouverture 2 (figures 3 et 10).

Lorsque le pion 515 arrive à la fin de la deuxième partie rectiligne 530A de la gorge 530, la plaque 100 ferme l'ouverture 2 de la paroi 1. Le joint d'étanchéité 300 est toujours dégonflé.

Lorsque le pion 515 coulisse dans la partie inclinée de la gorge 530, l'actionneur 510 pivote autour du montant 512 et le crochet 514 vient s'accrocher sur l'extrémité évasée 451 de la tige 450 du piston 410. Le montant 512 de l'actionneur 510 coulisse ensuite dans la partie droite 525A de l'ouverture 525 du patin 520.

Ce faisant, l'extrémité évasée 451 de la tige 450 est repoussée par la paroi de butée 514A du crochet 514 de l'actionneur 510.

La tige 450 du piston 410 coulisse dans le manchon 430. Le piston 410 comprime le fluide contenu dans la chambre 420. Ce fluide est poussé vers le conduit 440 qui relie la chambre 420 au logement intérieur 320 du joint d'étanchéité 300 et acheminé vers le logement intérieur 320 du joint d'étanchéité 300.

Le joint d'étanchéité 300 se gonfle progressivement.

En bout de course de l'actionneur 510, le montant 512 de l'actionneur 510 vient en butée contre la paroi latérale interne de l'ouverture 525 du patin 520.

Le joint d'étanchéité est alors gonflé et s'appuie contre la plaque 100 de manière à rendre étanche l'obturation de l'ouverture 2 par la plaque 1.

Ainsi, grâce au panneau selon l'invention, il est possible d'obturer et de libérer une ouverture d'une paroi grâce à une plaque de manière étanche grâce à un joint gonflable et dégonflable. Ce panneau est peu coûteux et robuste car la commande du gonflage et dégonflage du joint est mécanique. En outre, sa mise en œuvre est très simple et rapide. Le gonflage et dégonflage du joint est entraîné automatiquement par la commande de l'ouverture ou de la fermeture du panneau, sans intervention spécifique de l'utilisateur.

## Revendications

1. Panneau (1000) étanche mobile pour une paroi (1) d'un véhicule automobile, comprenant :
- une plaque (100) adaptée à obturer au moins partiellement une ouverture (2) ménagée dans ladite paroi (1),
- un dispositif de montage (200) de ladite plaque (100) sur ladite paroi (1), de manière mobile entre une position d'obturation au moins partielle de ladite ouverture (2) et une position de libération au moins partielle de cette ouverture (2),
- un joint d'étanchéité (300) gonflable et dégonflable, adapté à être disposé entre la plaque (100) et la paroi (1), ainsi que des moyens de gonflage et de dégonflage (400) de ce joint d'étanchéité (300), **caractérisé en ce qu'**il comprend un dispositif de couplage mécanique (500) reliant mécaniquement le dispositif de montage (200) de la plaque (100) et les moyens de gonflage et de dégonflage (400) du joint d'étanchéité (300), de telle sorte que la mise en œuvre du dispositif de montage (200) pour faire passer la plaque (100) de sa position d'obturation vers sa position de libération entraîne le dégonflage du joint d'étanchéité (300) et la mise en œuvre du dispositif de montage (200) pour faire passer la plaque (100) de sa position de libération vers sa position d'obturation entraîne le gonflage du joint d'étanchéité (300), le dispositif de couplage mécanique (500) comprenant un actionneur (510) relié audit dispositif de montage (200) et monté sur un patin (520) solidaire de ladite plaque (100).

2. Panneau (1000) selon la revendication 1, dans lequel ledit dispositif de montage (200) est adapté au montage de la plaque (100) sur ladite paroi (1) de manière mobile en coulissement entre ladite position d'obturation de l'ouverture (2) et ladite position de libération de cette ouverture (2).

3. Panneau (1000) selon la revendication 2, dans lequel le dispositif de montage (200) comporte au moins un rail (210A, 210B) dans lequel ladite plaque (100) est montée à coulissement et des moyens d'entraînement de la plaque (100) en coulissement sur ce rail (210A, 210B).

4. Panneau (1000) selon la revendication 3, dans lequel lesdits moyens d'entraînement comportent un câble (221A, 221B) adapté à être actionné par un moyen d'actionnement (222) électrique ou manuel.

5. Panneau (1000) selon l'une des revendications 1 à 4, dans lequel ledit joint d'étanchéité (300) comprend une enveloppe (310) externe souple délimitant un logement intérieur (320) adapté à se remplir d'un fluide.

6. Panneau (1000) selon la revendication 5, dans lequel les moyens de gonflage et de dégonflage (400) comportent au moins un piston (410) adapté à se déplacer en translation dans une chambre (420) en communication fluidique avec le logement intérieur (320) du joint d'étanchéité (300), de manière à pousser le fluide vers le joint d'étanchéité (300) dans un sens de déplacement du piston (410) et à extraire ce fluide hors du joint d'étanchéité (300) dans l'autre sens de déplacement du piston (410).

7. Panneau (1000) selon la revendication 6, dans lequel lesdits moyens de couplage (500) établissent une liaison mécanique entre le dispositif de montage (200) de la plaque (100) et le piston (410) des moyens de gonflage et de dégonflage (400).

8. Panneau (1000) selon la revendication 7, dans lequel ledit actionneur (510) comprend des moyens de coopération (514) débrayable avec une tige (450) du piston (410).

9. Panneau (1000) selon la revendication 8, dans lequel ledit actionneur (510) est monté mobile sur ledit patin (520) de telle sorte que, lorsque le dispositif de montage (200) est actionné de manière à faire passer la plaque (100) de sa position d'obturation à sa position de libération, l'actionneur (510) est déplacé en translation de manière à :
- entraîner le déplacement du piston (410) des moyens de gonflage et de dégonflage (400) dans le sens entraînant le dégonflage du joint d'étanchéité (300), puis
- débrayer la coopération de l'actionneur (510) et du piston (410), et
- entraîner en coulissement la plaque (100) elle-même ;
et lorsque le dispositif de montage (200) est actionné de manière à faire passer la plaque (100) de sa position de libération à sa position d'obturation, l'actionneur (510) est déplacé en translation de manière à :
- entraîner en coulissement la plaque (100) elle-même,
- embrayer la coopération de l'actionneur (510) et du piston (410), et
- entraîner le déplacement du piston (410) des moyens de gonflage et de dégonflage (400) dans le sens entraînant le gonflage du joint d'étanchéité (300).

10. Véhicule automobile comportant un panneau (1000) mobile étanche selon l'une des revendications précédentes, ladite plaque (100) de ce panneau (1000) constituant la vitre adaptée à obturer une fenêtre de ce véhicule.

## Patentansprüche

1. Bewegliches dichtes Paneel (1000) für eine Wand (1) eines Kraftfahrzeugs, umfassend:
- eine Platte (100), die dafür ausgelegt ist, eine in der Wand (1) ausgebildete Öffnung (2) wenigstens teilweise zu verschließen,
- eine Vorrichtung zur Montage (200) der Platte (100) an der Wand (1), derart, dass sie zwischen einer Position des wenigstens teilweisen Verschließens der Öffnung (2) und einer Position der wenigstens teilweisen Freigabe dieser Öffnung (2) beweglich ist,
- eine aufblasbare und ablassbare Dichtung (300), die dafür ausgelegt ist, zwischen der Platte (100) und der Wand (1) angeordnet zu werden, sowie Mittel zum Aufblasen und Ablassen (400) dieser Dichtung (300),
**dadurch gekennzeichnet, dass** es eine mechanische Kopplungsvorrichtung (500) umfasst, welche die Vorrichtung zur Montage (200) der Platte (100) und die Mittel zum Aufblasen und Ablassen (400) der Dichtung (300) mechanisch verbindet, derart, dass die Betätigung der Montagevorrichtung (200), um die Platte (100) aus ihrer Position des Verschließens in ihre Position der Freigabe gelangen zu lassen, das Ablassen der Dichtung (300) zur Folge hat und die Betätigung der Montagevorrichtung (200), um die Platte (100) aus ihrer Position der Freigabe in ihre Position des Verschließens gelangen zu lassen, das Aufblasen der Dichtung (300) zur Folge hat, wobei die mechanische Kopplungsvorrichtung (500) einen Aktuator (510) umfasst, der mit der Montagevorrichtung (200) verbunden ist und auf einem Gleitschuh (520) angebracht ist, der mit der Platte (100) fest verbunden ist.

2. Paneel (1000) nach Anspruch 1, wobei die Montagevorrichtung (200) für die Montage der Platte (100) an der Wand (1) derart ausgelegt ist, dass sie zwischen der Position des Verschließens der Öffnung (2) und der Position der Freigabe dieser Öffnung (2) gleitbeweglich ist.

3. Paneel (1000) nach Anspruch 2, wobei die Montagevorrichtung (200) wenigstens eine Schiene (210A, 210B), in welcher die Platte (100) gleitend gelagert ist, und Mittel zum Antrieb der Platte (100), so dass sie auf dieser Schiene (210A, 210B) gleitet, aufweist.

4. Paneel (1000) nach Anspruch 3, wobei die Mittel zum Antrieb ein Kabel (221A, 221B) umfassen, das dafür ausgelegt ist, von einem elektrischen oder manuellen Betätigungsmittel (222) betätigt zu werden.

5. Paneel (1000) nach einem der Ansprüche 1 bis 4, wobei die Dichtung (300) eine flexible äußere Hülle (310) umfasst, die einen inneren Aufnahmeraum (320) begrenzt, der dafür ausgelegt ist, sich mit einem Fluid zu füllen.

6. Paneel (1000) nach Anspruch 5, wobei die Mittel zum Aufblasen und Ablassen (400) wenigstens einen Kolben (410) aufweisen, der dafür ausgelegt ist, sich in einer Kammer (420), die mit dem inneren Aufnahmeraum (320) der Dichtung (300) in Fluidverbindung steht, translatorisch zu bewegen, derart, dass das Fluid in einer Bewegungsrichtung des Kolbens (410) in Richtung der Dichtung (300) gedrückt wird, und dass dieses Fluid in der anderen Bewegungsrichtung des Kolbens (410) aus der Dichtung (300) abgesaugt wird.

7. Paneel (1000) nach Anspruch 6, wobei die Kopplungsmittel (500) eine mechanische Verbindung zwischen der Vorrichtung zur Montage (200) der Platte (100) und dem Kolben (410) der Mittel zum Aufblasen und Ablassen (400) herstellen.

8. Paneel (1000) nach Anspruch 7, wobei der Aktuator (510) Mittel zum lösbaren Zusammenwirken (514) mit einer Stange (450) des Kolbens (410) umfasst.

9. Paneel (1000) nach Anspruch 8, wobei der Aktuator (510) beweglich auf dem Gleitschuh (520) angebracht ist, derart, dass, wenn die Montagevorrichtung (200) betätigt wird, um die Platte (100) aus ihrer Position des Verschließens in ihre Position der Freigabe gelangen zu lassen, der Aktuator (510) translatorisch bewegt wird, um:
- die Bewegung des Kolbens (410) der Mittel zum Aufblasen und Ablassen (400) in der Richtung anzutreiben, die das Ablassen der Dichtung (300) zur Folge hat, danach
- das Zusammenwirken des Aktuators (510) und des Kolbens (410) zu unterbrechen, und
- die Platte (100) selbst gleitend anzutreiben; und wenn die Montagevorrichtung (200) betätigt wird, um die Platte (100) aus ihrer Position der Freigabe in ihre Position des Verschließens gelangen zu lassen, der Aktuator (510) translatorisch bewegt wird, um:
- die Platte (100) selbst gleitend anzutreiben,
- das Zusammenwirken des Aktuators (510) und des Kolbens (410) zu bewirken, und
- die Bewegung des Kolbens (410) der Mittel zum Aufblasen und Ablassen (400) in der Richtung anzutreiben, die das Aufblasen der Dichtung (300) zur Folge hat.

10. Kraftfahrzeug, welches ein bewegliches dichtes Paneel (1000) nach einem der vorhergehenden Ansprüche aufweist, wobei die Platte (100) dieses Paneels (1000) die Glasscheibe darstellt, die dafür ausgelegt ist, ein Fenster dieses Fahrzeugs zu verschließen.

## Claims

1. Moveable leaktight panel (1000) for a wall (1) of a motor vehicle, comprising:
- a plate (100) that is designed to at least partially close off an opening (2) formed in said wall (1),
- a mounting device (200) for mounting said plate (100) on said wall (1) so as to be moveable between a position at least partially closing off said opening (2) and a position at least partially opening up said opening (2),
- an inflatable and deflatable seal (300) that is designed to be arranged between the plate (100) and the wall (1), and inflation and deflation means (400) for inflating and deflating said seal (300), **characterized in that** it comprises a mechanical coupling device (500) mechanically linking the mounting device (200) for mounting the plate (100) and the inflation and deflation means (400) for inflating and deflating the seal (300), such that the implementation of the mounting device (200) to move the plate (100) from the closing-off position thereof to the opening-up position thereof involves deflating the seal (300) and the implementation of the mounting device (200) to move the plate (100) from the opening-up position thereof to the closing-off position thereof involves inflating the seal (300), the mechanical coupling device (500) including an actuator (510) that is linked to said mounting device (200) and mounted on a pad (520) rigidly connected to said plate (100).

2. Panel (1000) according to Claim 1, in which said mounting device (200) is designed to enable the plate (100) to be mounted on said wall (1) slidingly and moveably between said position closing off the opening (2) and said position opening up said opening (2).

3. Panel (1000) according to Claim 2, in which the mounting device (200) has at least one rail (210A, 210B) in which said plate (100) is mounted slidingly and drive means for driving the plate (100) slidingly on said rail (210A, 210B).

4. Panel (1000) according to Claim 3, in which said drive means include a cable (221A, 221B) designed to be actuated by an electric or manual actuating means (222).

5. Panel (1000) according to one of Claims 1 to 4, in which said seal (300) has a flexible outer envelope (310) delimiting an internal space (320) that can be filled with a fluid.

6. Panel (1000) according to Claim 5, in which the inflation and deflation means (400) include at least one piston (410) that is designed to move in translation in a chamber (420) in fluid communication with the internal space (320) of the seal (300), such as to push the fluid towards the seal (300) in one direction of movement of the piston (410) and to extract said fluid from the seal (300) in the other direction of movement of the piston (410) .

7. Panel (1000) according to Claim 6, in which said coupling means (500) establish a mechanical link between the mounting device (200) of the plate (100) and the piston (410) of the inflation and deflation means (400).

8. Panel (1000) according to Claim 7, in which said actuator (510) includes disengageable cooperation means (514) with a rod (450) of the piston (410).

9. Panel (1000) according to Claim 8, in which said actuator (510) is mounted moveably on said pad (520) such that, when the mounting device (200) is actuated to move the plate (100) from the closing-off position thereof to the opening-up position thereof, the actuator (510) is moved in translation such as to:
- drive the movement of the piston (410) of the inflation and deflation means (400) in the direction causing the deflation of the seal (300), then
- disengage the cooperation between the actuator (510) and the piston (410), and
- slidingly drive the plate (100) itself,
and when the mounting device (200) is actuated to move the plate (100) from the opening-up position thereof to the closing-off position thereof, the actuator (510) is moved in translation such as to:
- slidingly drive the plate (100) itself,
- engage the cooperation between the actuator (510) and the piston (410), and
- drive the movement of the piston (410) of the inflation and deflation means (400) in the direction causing the inflation of the seal (300).

10. Motor vehicle including a moveable leaktight panel (1000) according to one of the preceding claims, said plate (100) of said panel (1000) being the glass designed to close off a window of said vehicle.
